# EUROPEAN PATENT SPECIFICATION

(11) **EP 1 669 469 B1**
(45) Date of publication and mention of the grant of the patent: **17.12.2008**
(21) Application number: 04747934.0
(22) Date of filing: 16.07.2004
(51) Int. Cl.: C22C 38/00, C21D 8/00, C21D 9/28, C22C 38/14

(54) **STEEL PARTS FOR MACHINE STRUCTURE, MATERIAL THEREFOR, AND METHOD FOR MANUFACTURE THEREOF**
STAHLTEILE FÜR EINE MASCHINENKONSTRUKTION, MATERIAL DAFÜR UND HERSTELLUNGSVERFAHREN DAFÜR
PIECES EN ACIER POUR STRUCTURE DE MACHINE, MATERIAU UTILISE ET PROCEDE DE FABRICATION CORRESPONDANT

(30) Priority: 29.09.2003 JP 2003338637
(43) Date of publication of application: 14.06.2006
(73) Proprietor: JFE Steel Corporation, Tokyo, 100-0011 (JP)
(72) Inventor: HAYASHI, Tohru, Chiyoda-ku, Tokyo 100-0011 (JP); OMORI, Yasuhiro, Chiyoda-ku, Tokyo 100-0011 (JP); KUROSAWA, Nobutaka, Chiyoda-ku, Tokyo 100-0011 (JP); MATSUZAKI, Akihiro, Chiyoda-ku, Tokyo 100-0011 (JP); TOYOOKA, Takaaki, Chiyoda-ku, Tokyo 100-0011 (JP); YAMADA, Katsumi,, Chiyoda-ku, Tokyo 100-0011 (JP)
(74) Representative: HOFFMANN EITLE
(86) International application number: PCT/JP2004/010571
(87) International publication number: WO 2005/031021

(56) References cited:
- EP-A1- 1 178 126
- EP-A1- 1 359 235
- GB-A- 2 345 490
- JP-A- 5 017 821
- JP-A- 7 090 484
- JP-A- 8 053 714
- JP-A- 8 188 847
- JP-A- 10 219 392
- JP-A- 11 158 538

## Description

### Technical Field

The present invention relates to a steel part for machine structural use, such as an automobile drive shaft or constant velocity joint, having a hard layer on the surface thereof formed by induction quenching, a raw material for the steel part, and a manufacturing method thereof.

### Background Art

Heretofore, as for machine structural parts, such as an automobile drive shaft or constant velocity joint, after a hot-rolled steel bar is subjected to hot forging, followed by cutting, cold forging, and the like so as to have a predetermined shape, in general, a fatigue strength is imparted to the machine structural part thus treated by induction quenching and tempering, the fatigue strength, such as torsional fatigue strength, bending fatigue strength, and sliding and rolling contact fatigue strength, being important properties for machine structural parts.

In recent years, concomitant with growing demand for reduction in weight of automobile parts due to environmental issues, further improvement in fatigue strength of the machine structural parts as described above has been increasingly required.

As means for improving the fatigue strengths as described above, various methods have been proposed. For example, in order to improve the fatigue strength, the increase in quenching depth by induction quenching may be considered. However, the fatigue strength becomes saturated at a certain quenching depth and cannot be further improved.

In addition, for improvement in fatigue strength, the improvement in grain boundary strength is also effective, and for example, in Japanese Unexamined Patent Application Publication No. 2000-154819, a technique has been proposed in which austenite grains are particularized by precipitating a large amount of fine TiC in heating of induction quenching.

However, according to the above technique, in order to precipitate a large amount of fine TiC in heating of induction quenching, it is necessary to heat steel to a high temperature, such as 1,100°C or more, in hot rolling so as to place the TIC in a solution state, and as a result, the productivity is disadvantageously degraded. In addition, only by precipitating a large amount of TiC in order to particularize austenite grains, the recent requirement for the fatigue strength cannot be fully satisfied.

In Japanese Unexamined Patent Application Publication No. 8-53714, a machine structural part having an improved fatigue strength has been proposed in which the fatigue strength is improved by controlling the following properties within respective predetermined ranges in accordance with the amount of C while a ratio CD/R is limited in the range of 0.3 to 0.7, CD being the thickness (depth of quenching) of a hard layer formed by induction quenching of a machine structural part having a circular transverse section, R being the radius thereof. The properties mentioned above are the above CD/R, grain diameter rf of prior austenite in a region from the surface to 1 mm depth after induction quenching, average Vickers hardness Hf up to a ratio CD/R of 0.1 as obtained by induction quenching, and value A obtained from average Vickers hardness Hc of an axial central portion after induction quenching.

However, by the part described above, as is the case described above, the recent requirement for the fatigue strength cannot be fully satisfied.

### Disclosure of Invention

An object of the present invention is to provide a machine structural part having a higher fatigue strength than that obtained in the past, a raw material therefore, and a method for manufacturing the machine structural part.

The object described above can be realized by a machine structural part comprising the features of claim 1.

The machine structural part described above is manufactured by using a raw material which is composed of the components described in claim 1. That is, when heating is performed for this raw material for the machine structural part to 800°C to 1,000°C at least one time by induction quenching at a heating rate of 300°C/sec or more in a temperature region of 600°C to 800°C.

### Brief Description of the Drawings

Fig. 1 is an electron microscope photograph of a precipitate containing Mo.
Fig. 2 is a view showing the relationship between the heating temperature in induction quenching performed for steel containing Mo and steel containing no Mo and the prior austenite grain diameter of a hard layer.
Fig. 3 is a view showing the relationship between the bending fatigue strength and the prior austenite grain diameters of steel containing Mo and steel containing no Mo.

### Best Mode for Carrying Out the Invention

In general, the fatigue strength of steel is increased as the strength thereof is increased; however, when the hardness of a quenched portion has a hardness Hv (Vickers hardness) of 500 or more, fatigue failure caused by grain boundary fracture or caused from a non-metal inclusion becomes dominant, and as a result, even when the strength is increased, the fatigue strength is not increased.

Accordingly, through detailed research carried out by the inventors of the present invention in order to effectively improve the fatigue strength of a machine structural part by improvement in grain boundary strength and by controlling a non-metal inclusion composed of oxides, the following knowledge was obtained.
(1) When a precipitate containing Mo is formed in a raw material before induction quenching, the growth of austenite grains is inhibited in heating of induction quenching, and the prior austenite grain diameter of a hard layer can be made to be 7 µm or less. As a result, the grain boundary strength is improved, and hence a high fatigue strength can be obtained.
(2) Furthermore, when the maximum diameter of a non-metal inclusion composed of oxides is decreased to 15 µm or less, the fatigue failure occurs from the surface, and as a result, a high fatigue strength can be obtained as compared to that obtained in the past.
(3) When the microstructure of a raw material before induction quenching is composed of a bainite microstructure and a martensite microstructure, and the total volume fraction thereof is set to 10% or more, the number of nucleation sites of austenite grains is increased in heating of induction quenching, and as a result, the prior austenite grains of the hard layer can be particularized.
(4) Under conditions of induction quenching in which the heating rate is set to 300°C/sec or more, the heating temperature is set in the range of 800°C to 1,000°C, and the residence time at a temperature of 800°C or more is set to 5 seconds or less, the prior austenite grains of the hard layer can be particularized. In particular, in combination with the precipitate containing Mo in the above (1) and the microstructure of the raw material in the above (3), the prior austenite grains can be particularized so as to have a diameter of 7 µm or less.

The present invention was made based on the knowledge described above, and hereinafter, the details thereof will be described.

### 1. Machine Structural Part

### 1-1. Components

C: C is an element having the most significant influence on quenching properties, can make the hard layer harder, and can make the thickness thereof larger, thereby improving the fatigue strength. However, when the content is less than 0.3 percent by mass or less, the thickness of the hard layer must be considerably increased in order to ensure a required fatigue strength, and as a result, the generation of quench cracking markedly occurs. On the other hand, when the content is more than 0.7 percent by mass, the grain boundary strength is decreased, the fatigue strength is decreased, and as a result, the machinability and cold forging properties of the raw material and quench cracking resistance after quenching are degraded. Hence, the content of C is set to 0.3 to 0.7 percent by mass.

Si: Si increases the number of nucleation sites of austenite in heating of quenching and also has a function of particularizing the hard layer by suppressing the growth of austenite grains. In addition, Si has a function of suppressing the decrease in grain boundary strength by suppressing the formation of carbides. Hence, Si is an element which is very effective in improving the fatigue strength. However, when the content is more than 0.30 percent by mass, the machinability of the raw material is degraded. Hence, the content of Si is set to 0.30 percent by mass or less.

Mn: Mn is an indispensable element for improving the quenching properties and for ensuring the thickness of the hard layer. However, when the content is less than 0.2 percent by mass, the effect is not significant. On the other hand, when the content is more than 2.0 percent by mass, the amount of retained austenite is increased after quenching, the hardness of the surface portion is decreased, and as a result, the fatigue strength is decreased. Hence, the content of Mn is set to 0.2 to 2.0 percent by mass. In addition, when the content of Mn is high, the hardness of the raw material is increased, and the machinability tends to be disadvantageously degraded; hence, the content is more preferably set to 1.2 percent by mass or less and is even more preferably set to 1.0 percent by mass or less.

Al: Al is an element effective in deoxidizing steel. In addition, since suppressing the grain growth of austenite in heating of quenching so as to particularize the hard layer, Al is also an effective element. However, when the content is less than 0.005 percent by mass, the effect is not significant. On the other hand, when the content is more than 0.25 percent by mass, the effect is saturated, and the manufacturing cost is increased. Hence, the content of Al is set in the range of 0.005 to 0.25 percent by mass.

Ti: Since being bonded with N which enters steel as an unavoidable impurity, Ti is effective in preventing B from being converted into BN. As described later, this conversion into BN loses the induction quenching properties. Hence, the content must be at least 0.005 percent by mass; however, when the content is more than 0.1 percent by mass, a large amount of TiN is formed to cause fatigue failure, and as a result, the rotary bending fatigue strength is considerably decreased. Accordingly, the content of Ti is set in the range of 0.005 to 0.1 percent by mass.

Mo: Mo has an influence of suppressing the growth of austenite grains in heating of quenching so as to particularize the hard layer. In particular, when the heating temperature in quenching is set in the range of 800°C to 1,000°C and is preferably set in the range of 800°C to 950°C, the growth of austenite grains is significantly suppressed. Furthermore, since being effective in improving the quenching properties, Mo is used for the adjustment thereof. In addition, Mo has an effect of suppressing the formation of carbides so as to prevent the grain boundary strength from being decreased.

As described above, although Mo is an element playing a very important role in the present invention, when the content is less than 0.05 percent by mass, the prior austenite grain diameter cannot be decreased to 7 µm or less all over the entire thickness of the hard layer. On the other hand, when the content is more than 0.6 percent by mass, the machinability of the raw material is degraded. Hence, the content of Mo is set in the range of 0.05 to 0.6 percent by mass and is preferably set in the range of 0.2 to 0.4 percent by mass.

The reason the growth of austenite grains is suppressed and the hard layer is particularized is believed due to a solute drag effect of Mo itself or a pinning effect of grain growth by a precipitate containing Mo, and as described later, it is considered that the latter has a more significant effect.

B: By addition of a small amount of B, the quenching properties are improved, and B has an effect of improving the rotary bending fatigue strength by increasing the thickness of the hard layer. Furthermore, B preferentially segregates at the grain boundaries to decrease the concentration of P which also segregates at the grain boundaries and to increase the grain boundary strength, and as a result, the rotary bending fatigue strength can be improved. However, when the content is less than 0.0003 percent by mass, the effect is not significant. On the other hand, when the content is more than 0.006 percent by mass, the effect is saturated, and the manufacturing cost is adversely increased. Hence, the content of B is set in the range of 0.0003 to 0.006 percent by mass and is preferably set in the range of 0.0005 to 0.004 percent by mass.

S: S is an element forming MnS and improves the machinability of the raw material; however, when the content is more than 0.06 percent by mass, S segregates at the grain boundaries, and as a result, the grain boundary strength is decreased. Hence, the content of S is set to 0.06 percent by mass or less.

P: P segregates at the austenite grain boundaries to decrease the grain boundary strength and to decrease the rotary bending fatigue strength. In addition, quench cracking is promoted. Hence, the content of P is set to 0.020 percent by mass or less, and it is more preferable when the content is further decreased.

0: 0 is present in the raw material as a non-metal inclusion and functions to cause fatigue failure, and as a result, the rotary bending fatigue strength is decreased. In particular, when the prior austenite grain diameter after quenching is decreased so as to improve the grain boundary strength, the fatigue failure is liable to occur from a non-metal inclusion. Hence, as described above, the maximum diameter of the non-metal inclusion must be set to 15 µm or less, and for this control, the content of O is necessarily set to 0.0030 percent by mass or less, preferably 0.0010 percent by mass or less, and more preferably 0.0008 percent by mass or less.

In addition, the balance includes Fe and unavoidable impurities.

Besides the above basic components, when at least one element selected from the group consisting of 2.5% or less of Cr, 1.0% or less of Cu, 3.5% or less of Ni, 1.0% or less of Co, 0.1% or less of Nb, 0.5% or less of V, 0.5% or less of Ta, 0.5% or less of Hf, and 0.015% or less of Sb is contained, the fatigue strength is more effectively improved by the following reasons.

Cr: Cr is an element effective in improving the quenching properties and in ensuring the thickness of the hard layer. However, when the content is more than 2.5 percent by mass, carbides are stabilized, the growth of residual carbides is promoted, and the grain boundary strength is decreased, so that the fatigue strength is decreased. Hence, the content of Cr is set to 2.5 percent by mass or less and preferably 1.5 percent by mass or less; however, it is more preferable when the content is further decreased. In addition, in order to improve the quenching properties, the content is preferably set to 0.03 percent by mass or more.

Cu: Cu is an element effective in improving the quenching properties. In addition, Cu is dissolved in ferrite and improves the fatigue strength by solid-solution hardening. Furthermore, Cu suppresses the formation of carbides and prevents the decrease in grain boundary strength, and as a result, the fatigue strength is improved. However, when the content is more than 1.0 percent by mass, cracking occurs in hot working. Hence, the content of Cu is set to 1.0 percent by mass or less and preferably 0.5 percent by mass or less. When the content is less than 0.03 percent by mass, since the effect of improving the quenching properties and the effect of suppressing the decrease in grain boundary strength are not significant, the content is preferably set to 0.03 percent by mass or more and more preferably 0.1 percent by mass or more.

Ni: Since being an element improving the quenching properties, Ni is used for adjustment thereof. In addition, Ni suppresses the formation of carbides, prevents the decrease in grain boundary strength, and improves the fatigue strength. However, since Ni is a very expensive element, when the content thereof is more than 3.5 percent by mass, the manufacturing cost is considerably increased. Hence, the content of Ni is set to 3.5 percent by mass or less. In addition, when the content of Ni is less than 0.05 percent by mass, since the effect of improving the quenching properties and the effect of suppressing the decrease in grain boundary strength are not significant, the content is preferably set to 0.05 percent by mass or more and more preferably set in the range of 0.1 to 1.0 percent by mass.

Co: Co is an element which suppresses the formation of carbides, prevents the decrease in grain boundary strength, and improves the fatigue strength. However, since Co is a very expensive element, when the content thereof is more than 1.0 percent by mass, the manufacturing cost is considerably increased. Hence, the content of Co is set to 1.0 percent by mass or less. In addition, when the content of Co is less than 0.01 percent by mass, since the effect of suppressing the decrease in grain boundary strength is not significant, the content is preferably set to 0.01 percent by mass or more and more preferably set in the range of 0.02 to 0.5 percent by mass.

Nb: Nb is bonded with C and N to provide precipitation strengthening of steel besides the improvement in quenching properties. In addition, Nb is also an element improving the resistance to temper softening, and by the effect described above, the fatigue strength is improved. However, when the content is more than 0.1 percent by mass, the effect is saturated. Hence, the content of Nb is set to 0.1 percent by mass or less. When the content of Nb is less than 0.005 percent by mass, since the effects of improving the precipitation strengthening and the resistance to temper softening are not significant, the content is preferably set to 0.005 percent by mass or more and more preferably set in the range of 0.01 to 0.05 percent by mass.

V: V is bonded with C and N to provide precipitation strengthening of steel. In addition, V is also an element improving the resistance to temper softening, and by the effect described above, the fatigue strength is improved. However, when the content is more than 0.5 percent by mass, the effect is saturated. Hence, the content of V is set to 0.5 percent by mass or less. In addition, when the content of V is less than 0.01 percent by mass, since the effect of improving the fatigue strength is not significant, the content is preferably set to 0.01 percent by mass or more and more preferably set in the range of 0.03 to 0.3 percent by mass.

Ta: Ta has an effect of delaying the change in microstructure and an effect of preventing the decrease in fatigue strength, particularly, the rolling contact fatigue strength. However, when the content is more than 0.5 percent by mass, the effect is saturated. Hence, the content of Ta is set to 0.5 percent by mass or less. In addition, when the content of Ta is less than 0.02 percent by mass, since the effect of improving the fatigue strength is not significant, the content is preferably set to 0.02 percent by mass or more.

Hf: Hf has an effect of delaying the change in microstructure and an effect of preventing the decrease in fatigue strength, particularly, the rolling contact fatigue strength. However, when the content is more than 0.5 percent by mass, the effect is saturated. Hence, the content of Hf is set to 0.5 percent by mass or less. In addition, when the content of Hf is less than 0.02 percent by mass, since the effect of improving the fatigue strength is not significant, the content is preferably set to 0.02 percent by mass or more.

Sb: Sb has an effect of delaying the change in microstructure and an effect of preventing the decrease in fatigue strength, particularly, the rolling contact fatigue strength. However, when the content is more than 0.015 percent by mass, the toughness is degraded. Hence, the content of Sb is set to 0.015 percent by mass or less and preferably 0.010 percent by mass or less. In addition, when the content of Sb is less than 0.005 percent by mass, since the effect of improving the fatigue strength is not significant, the content is preferably set to 0.005 percent by mass or more.

In addition to the basic components described above, or in addition to the basic components and the component more effective in improving the fatigue strength, when at least one element selected from the group consisting of 1.0% or less of W, 0.005% or less of Ca, 0.005% or less of Mg, 0.1% or less of Se, 0.005% or less of Te, 0.5% or less of Bi, 0.5% or less of Pb, 0.01% or less of Zr, and 0.1% or less of REM on a mass basis is contained, the machinability of the raw material is more effectively improved by the following reasons.

W: W is an element improving the machinability by an embrittlement function. However, when the content is more than 1.0 percent by mass, the effect is not only saturated but the manufacturing cost is also increased. Hence, the content of W is set to 1.0 percent by mass or less. When the content of W is less than 0.005 percent by mass, since the effect of improving the machinability is not significant, the content is preferably set to 0.005 percent by mass or more.

Ca: Since forming a sulfide, which functions as a chip breaker, in combination with MnS and thereby improving the machinability, Ca may be added whenever necessary. However, when the content is more than 0.005 percent by mass, the effect is not only saturated but the manufacturing cost is also increased. Hence, the content of Ca is set to 0.005 percent by mass or less. When the content of Ca is less than 0.0001 percent by mass, since the effect of improving the machinability is not significant, the content is preferably set to 0.0001 percent by mass or more.

Mg: Since being not only a deoxidizing element but also being an element concentrating stress so as to improve the machinability, Mg may be added whenever necessary. However, when the content is excessive, the effect is not only saturated but the manufacturing cost is also increased. Hence, the content of Mg is set to 0.005 percent by mass or less. When the content of Mg is less than 0.0001 percent by mass, since the effect of improving the machinability is not significant, the content is preferably set to 0.0001 percent by mass or more.

Te, Se: Since Te or Se is bonded with Mn to form MnTe or MnSe which functions as a chip breaker, the machinability is improved. However, when the content is more than 0.1 percent by mass, the effect is not only saturated but the manufacturing cost is also increased. Hence, the content of Te or Se is set to 0.1 percent by mass or less. When the content of Te or Se is less than 0.003 percent by mass, since the effect of improving the machinability is not significant, the contents are each preferably set to 0.003 percent by mass or more.

Bi: Bi has melting, lubricating, and embrittlement functions in a cutting step, thereby improving the machinability. However, when the content is more than 0.5 percent by mass, the effect is not only saturated but the manufacturing cost is also increased. Hence, the content of Bi is set to 0.5 percent by mass or less. When the content of Bi is less than 0.01 percent by mass, since the effect of improving the machinability is not significant, the content is preferably set to 0.01 percent by mass or more.

Pb: Pb has melting, lubricating, and embrittlement functions in a cutting step, thereby improving the machinability. However, when the content is more than 0.5 percent by mass, the effect is not only saturated but the manufacturing cost is also increased. Hence, the content of Pb is set to 0.5 percent by mass or less. When the content of Pb is less than 0.01 percent by mass, since the effect of improving the machinability is not significant, the content is preferably set to 0.01 percent by mass or more.

Zr: Zr forms a sulfide, which functions as a chip breaker, in combination with MnS and thereby improves the machinability. However, when the content is more than 0.01 percent by mass, the effect is not only saturated but the manufacturing cost is also increased. Hence, the content of Zr is set to 0.01 percent by mass or less. When the content of Zr is less than 0.003 percent by mass, since the effect of improving the machinability is not significant, the content is preferably set to 0.003 percent by mass or more.

REM: REM forms a sulfide, which functions as a chip breaker, in combination with MnS and thereby improves the machinability. However, when the content is more than 0.1 percent by mass, the effect is not only saturated but the manufacturing cost is also increased. Hence, the content of REM is set to 0.1 percent by mass or less. When the content of REM is less than 0.0001 percent by mass, since the effect of improving the machinability is not significant, the content is preferably set to 0.0001 percent by mass or more.

### 1-2. Average Prior Austenite Grain Diameter of Hard Layer

In order to obtain a higher fatigue strength, in addition to the components described above, the average prior austenite grain diameter of the hard layer is necessarily set to 7 µm or less over the entire thickness of the hard layer, or is preferably set to 5 µm or less and more preferably 3 µm or less, the hard layer being formed on the surface of the part by induction quenching. When the average prior austenite grain diameter is more than 7 µm, a sufficient grain boundary strength cannot be obtained, and as a result, the improvement in fatigue strength cannot be achieved.

In this embodiment, the average prior austenite grain diameter over the entire thickness of the hard layer is measured as described below.

After induction quenching, the topmost layer of the part thus processed has 100% of a martensite microstructure on an area fraction basis. From the surface toward the inside, a region composed of a martensite microstructure having an area fraction of 100% is present to a certain depth, and from this certain depth, the area fraction of the martensite microstructure is rapidly decreased. In the present invention, the region from the quenched surface portion to a depth at which the area fraction of the martensite microstructure is decreased to 98% is defined as the hard layer. In addition, for this hard layer, the average prior austenite grain diameters are measured at depths of one fifth, one half, and four fifths of the thickness of the hard layer from the surface thereof, and when the average prior austenite grain diameters at all the above depths are 7 µm or less, the average prior austenite grain diameter of the hard layer is regarded as 7 µm or less.

For the measurement of the average prior austenite grain diameter, after the cross-section of the hard layer was processed by using an etching solution which was prepared by dissolving 50 g of picric acid into 500 g of water, followed by addition of 11 g of sodium dodecylbenzene sulfonate, 1 g of ferrous chloride, and 1.5 g of oxalic acid, five visual fields of each measurement point were observed at a magnification from 400 (area of one visual field being 0.25 mm × 0.225 mm) to 1,000 (area of one visual field being 0.10 mm × 0.09 mm) using an optical microscope, and the average grain diameter was measured by an image analysis device.

In addition, in the case of the rolling contact fatigue which is present only in the microstructure located very close to the topmost surface, even when the thickness of the hard layer is approximately 1 mm, the effect may be obtained to some extent. However, in the case of the bending fatigue strength and the torsional fatigue strength, the thickness of the hard layer is preferably set to 2 mm or more. In addition, the thickness is more preferably 2.5 mm or more and even more preferably 3 mm or more.

1-3 Maximum Diameter of Non-Metal Inclusion Composed of Oxides

In order to achieve a higher fatigue strength than that obtained in the past, in addition to the above-described components and the prior austenite grain diameter of the hard layer, the maximum diameter of the non-metal inclusion composed of oxides must be set to 15 µm or less, preferably 12 µm or less, and more preferably 8 µm or less. When the non-metal inclusion composed of oxides is particularized, the number of points from which the fatigue failure occurs can be decreased, and in particular, when the maximum diameter of the inclusion is less than 15 µm or less, the points from which the fatigue failure occurs are limited to the surface. In addition, since the surface is a surface of a hard layer having a high grain boundary strength by induction quenching, the rotary bending fatigue strength can be significantly improved.

In this embodiment, the maximum diameter of the non-metal inclusion composed of oxides is obtained as described below.

By using an optical microscope, 800 visual fields were observed at a magnification of 400, and the maximum diameters of the inclusions composed of oxides in the individual visual fields are summarized on a Gumble probability paper, and an extreme value corresponding to 50,000 nm² is calculated and is defined as the maximum diameter.

In order to set the maximum diameter of the non-metal inclusion composed of oxides to 15 µm or less, as described above, the content of O may be set to 0.0030 percent by mass or less.

### 1-4. Effect of Mo

As described above, the reason the machine structural part of the present invention has a high fatigue strength is believed that since the precipitate containing Mo primarily suppresses the growth of austenite grains in heating of induction quenching by the pinning effect, the average prior austenite grain diameter of the hard layer after quenching is decreased to 7 µm or less by particularization.

To verify the reason described above, the following experiment was implemented, and consideration was made based on the results thereof.

After steel No. 1 of an example to be described later in Table 1 was rolled, forging having a rate of 80% and forging having a rate of 25% were performed at 850°C and 750°C, respectively, followed by cooling (at a cooling rate of 0.8°C/sec), so that a raw material for the machine structural part was obtained. From the central portion of the raw material thus formed, a sheet specimen used for observation by a transmission electron microscope was sampled. This sheet specimen was processed by electrochemical polishing using a perchloric acid-methanol-based electrolyte, so that a thin-film specimen was formed. When the thickness of the specimen is too small, precipitates fall at a high frequency, and when the thickness is too large, it becomes difficult to observe precipitates; hence, the thickness in an observation field was set in the range of 50 to 100 nm. This specimen thickness is a thickness estimated based on an electron energy-loss spectrum.

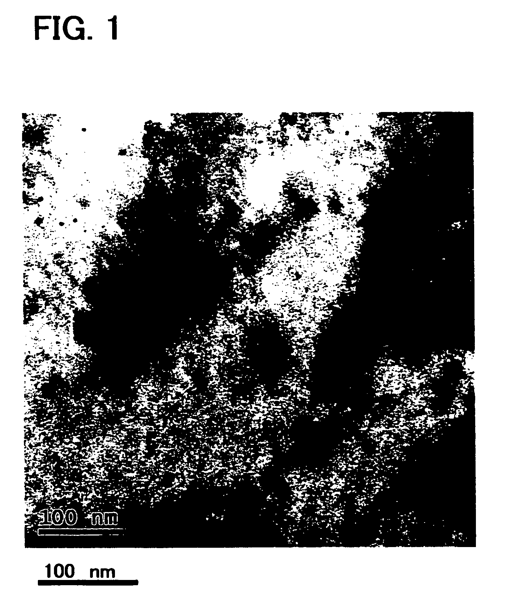

Fig. 1 shows one example of a photograph taken by an electron microscope.

In consideration of a specimen thickness of approximately 0.1 µm in this visual field, it is understood that fine precipitates having a grain diameter of approximately 5 to 10 nm are precipitated at a high density, such as approximately 3,000 per 1 µm³.

In heating of induction quenching, nucleation of austenite grains occurs at grain boundaries of bainite or martensite, packet boundaries, carbides, and the like, and the grains are then grown. The above fine precipitates suppress the movement of the interfaces of the austenite grains. This suppression of the interface movement is called pinning. When the total amount of the precipitates is constant, the pinning force is increased as the size of the precipitates is decreased, and on the other hand, when the size of the precipitates is constant, the pinning force is increased as the amount of the precipitates is increased.

The presence of the fine precipitates shown in Fig. 1 by way of example is confirmed even after induction quenching at 1,000°C or less, and it is believed that the precipitates which are not likely to be dissolved by heat treatment at a high temperature for a short period of time are effective in suppressing the growth of the austenite grains.

Next, in order to observe the influence of the distribution state of precipitates on the austenite grain diameter in heating of induction quenching, model calculation was performed by changing the volume fraction of precipitates containing Mo. That is, when the amount of Mo dissolved in other precipitated phases is assumed to be small, and the volume fraction f of fine precipitates containing Mo and the average grain diameter d thereof are determined, the number (precipitation density) of fine precipitates containing Mo per 1 µm³ be obtained by trial calculation for the case in which precipitates are uniformly distributed. When austenite grain diameter is determined by the pinning of the fine precipitates, the size thereof is inversely proportional to the precipitation density. Accordingly, in consideration of the case in which the grain diameter of the precipitates shown in Fig. 1 and the density thereof form an austenite microstructure having a grain diameter of 2 µm, the grain diameter and the precipitation density were investigated so as to obtain the pinning effect. As a result, it was understood that although the number of precipitates per 1 µm³ which has a direct effect of controlling the austenite grain diameter, varies in accordance with the volume fraction of the precipitates, for example, when the volume fraction is in the range of approximately 0.2% to 0.4%, a preferable range in which a sufficient pinning effect is obtained and in which the austenite grains can be particularized as is described below.

That is, in order to further particularize the austenite grains, the number of fine precipitates per 1 µm³ is 500 or more, and the average grain diameter thereof is 20 nm or less. It is more preferable that the number of fine precipitates per 1 µm³ be 1,000 or more, and the average grain diameter thereof be 15 nm or less. It is even more preferable that the number of fine precipitates per 1 µm³ be 2,000 or more, and the average grain diameter thereof be 12 nm or less.

After the precipitates were extracted from a mother material, when a residue was identified using an X-ray diffraction method, it was estimated that the residue is primarily composed of hcp type (Mo, Ti)₂(C, N). Furthermore, from the result obtained by analysis using an EDX system provided for a transmission electron microscope, it was found that the atomic ratio of Mo to Ti is approximately 8 to 2, and that Mo is a primary component. In the precipitates described above, precipitates having a composition different from an ideal stoichiometric composition of (Mo, Ti)₂(C, N) are also included. Anyway, it is believed that the precipitates are carbonitride compounds containing Mo and Ti.

The (Mo, Ti)₂(C, N) precipitates have been known to be relatively hard unlike precipitates of Cu or the like, and the precipitates described above are also considered to have a high capacity of preventing the austenite grain interfaces from passing therethrough. In addition, in consideration that the component ratio of Mo to Ti is considerably large and that Mo is an element which is unlikely to be diffused, even when the (Mo, Ti)₂(C, N) is held in a temperature region of approximately 600°C to 700°C, which is the precipitation temperature thereof, for a short period of time, it cannot be expected that the precipitates rapidly grow. Hence, in order to increase the precipitation amount of (Mo, Ti)₂(C, N) and to increase the distribution density, when the temperature is maintained for a short period of time in a temperature region in which the volume fraction of bainite and martensite microstructures, which will be described later, is obtained, precipitation of new (Mo, Ti)₂(C, N) can be expected while the formation of coarse and large precipitates from (Mo, Ti)₂(C, N) which is already precipitated is suppressed as small as possible.

### 2. Raw Material for Machine Structural Part

As the raw material for the machine structural part described above, in addition to the components described in the above 1-1 and the maximum diameter of the non-metal inclusion composed of oxides, a material having a bainite microstructure and a martensite microstructure must be used in which the total volume fraction thereof is 10% or more. The reason for this is that since carbides are finely precipitated in the bainite microstructure and the martensite microstructure as compared to that in a ferrite-pearlite microstructure, the area of ferrite/carbide interfaces is large, and austenite grains can be advantageously particularized, the interfaces being nucleation sites of the austenite grains in heating of induction quenching.

Of the bainite microstructure and the martensite microstructure, the martensite microstructure is preferable in order to particularize the prior austenite grains in the hard layer; however, when the ratio of the martensite microstructure is larger, the machinability of the raw material is degraded, and hence the ratio in volume fraction of the bainite to the martensite microstructures is preferably in the range of 100:0 to 40:60.

In order to prepare a raw material having the microstructure as described above, after molten steel having the composition described above is processed by working having a total reduction rate of 80% or more at a temperature of 800°C to 1,000°C, the steel thus processed must then be cooled at a cooling rate of 0.2°C/sec or more and preferably 0.5°C/sec or more in a temperature region of 500°C to 700°C. When the cooling rate is less than 0.2°C/sec, the total volume fraction of the bainite microstructure and the martensite microstructure cannot be 10% or more.

In addition, when second working having a rate of 20% or more is further performed in cooling in a region of 700°C to less than 800°C, after cooling, or at the An 1 transformation point or less after cooling, the bainite microstructure and the martensite microstructure can be particularized, and as a result, the austenite grains in heating of induction quenching can be further particularized. In this case, second working having a rate of 30% or more is more preferably performed.

As the process described above, for example, rolling, forging, ironing, rotary forming, and shotting may be mentioned.

As described in the above 1-4, in order to further particularize the austenite grains in heating of induction quenching, the number of fine precipitates containing Mo present in the raw material is 500 or more per 1 µm³, and the average grain diameter thereof is 20 nm or less.

### 3. Method for Manufacturing Machine Structural Part

The machine structural part of the present invention is obtained by performing induction quenching at least one time for the raw material for the machine structural part described in the above 2, in which heating is performed to 800°C to 1,000°C and preferably 800°C to 950°C at a heating rate of 300°C/sec or more, preferably 700°C/sec or more, and more preferably 1,000°C/sec or more in a temperature region of 600°C to 800°C.

When the heating temperature in induction quenching is set to less than 800°C, the growth of the austenite grains is not sufficient, and the hard layer cannot be formed. In addition, when the heating temperature is more than 1,000°C, or the heating rate in a temperature region of 600°C to 800°C is set to less than 300°C/sec, in addition to the promotion of the growth of the austenite grains, the austenite grain diameter considerably varies, and as a result, the fatigue strength is decreased.

In addition, when the residence time of the raw material in a temperature region of 800°C or more is more than 5 seconds, the growth of the austenite grains is promoted, so that the prior austenite grain diameter of the hard layer after the quenching may exceed 7 µm in some cases; hence, the residence time at 800°C or more is preferably set to 5 seconds or less. The residence time is more preferably set to 3 seconds or less.

The influence of the heating temperature in induction quenching on the prior austenite grain diameter of the hard layer is more clearly observed in steel containing Mo.

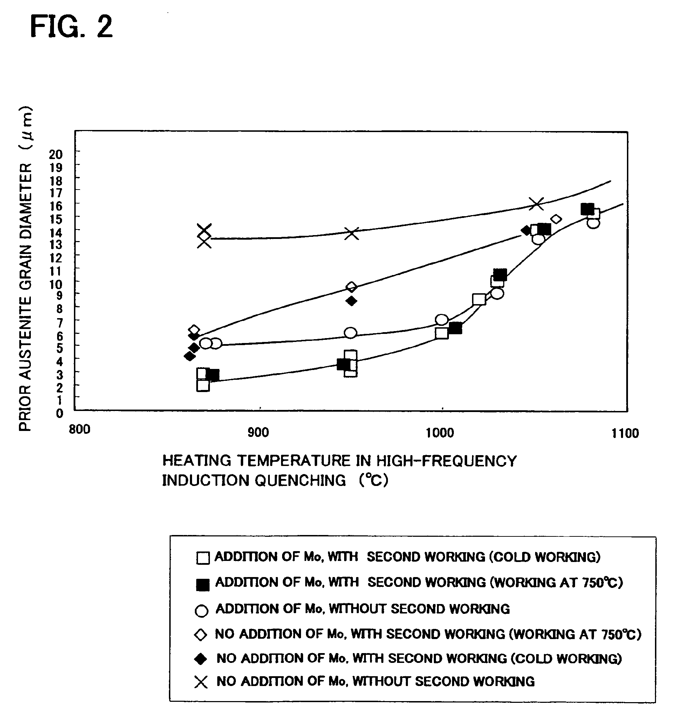

Fig. 2 is a graph showing the relationship between the prior austenite grain diameter of the hard layer and the heating temperature in induction quenching performed for steel containing Mo and steel containing no Mo.

The results shown in Fig. 2 are obtained by the following experiment.

The composition of the steel containing Mo contains on a mass basis 0.48% of C, 0.2% of Si, 0.79% of Mn, 0.024% of Al, 0.0039% of N, 0.021% of Ti, 0.45% of Mo, 0.0024% of B, 0.021% of S, 0.011% of P, and 0.0015% of 0, and in addition, the balance includes Fe and unavoidable impurities. The composition of the steel containing no Mo contains on a mass basis 0.48% of C, 0.2% of Si, 0.78% of Mn, 0.024% of Al, 0.0043% of N, 0.017% of Ti, 0.0013% of B, 0.019% of S, 0.011% of P, and 0.0015% of O, and in addition, the balance includes Fe and unavoidable impurities.

After 150 kg of the steel described above was molten in a vacuum furnace and was then hot-forged into a form of 150 mm by 150 mm, a dummy billet was formed and was then processed at 850°C by hot working having a rate of 80%, followed by cooling at a rate of 0.7°C/sec in a temperature region of 500°C to 700°C, so that steel bars were formed. Some of the steel bars were processed by second working having a rate of 20% after cooling or before cooling at 750°C.

From the steel bars thus obtained, test pieces for the rotary bending fatigue were sampled, and after being processed by induction quenching at a frequency of 10 to 200 kHz, a heating rate of 300°C/sec or more, a heating temperature of 870°C to 1,050°C, and a residence time of 1 second or less at 800°C or more, the test pieces thus processed were tempered in a heating furnace at 170°C for 30 minutes.

Subsequently, the rotary bending fatigue test was performed, and a critical stress at which no breakage was observed at 1×10⁸ times was defined as the fatigue strength. In addition, the prior austenite grain diameter of the hard layer after induction quenching was measured by the method described above.

As shown in Fig. 2, in the steel containing Mo and the steel containing no Mo, when the heating temperature in induction quenching is decreased, the prior austenite grain diameter of the hard layer is decreased. In particular, in the steel containing Mo, when the heating temperature is set to 1,000°C or less and preferably 950°C or less, the hard layer is significantly particularized.

Although the reasons for this have not been clearly understood, from the carbonitride compound containing Mo, the following reasons have been considered. That is, the above fine carbonitride compound containing Mo is precipitated in the steel containing Mo, and by a strong pinning effect, the austenite grains are particularized; however, when the heating temperature is more than 1,000°C, even though the heating time is short, fine (Mo, Ti)₂(C, N) is dissolved, and as a result, the pinning effect disappears.

When the second working is performed, both in the steel containing Mo and the steel containing no Mo, the prior austenite grain diameter can be decreased, and in addition, it is understood that in the steel containing Mo, a very fine prior austenite grain diameter of 3 µm or less can be obtained.

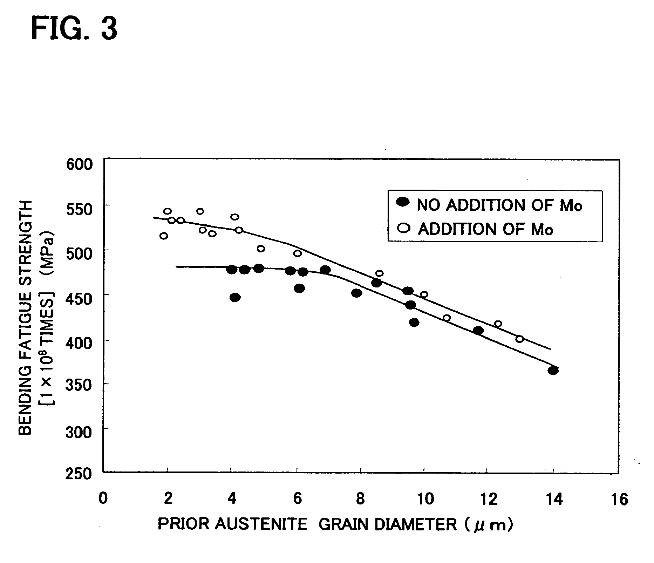

Fig. 3 is a graph showing the relationship between the bending fatigue strength and the prior austenite grain diameters of the steel containing Mo and the steel containing no Mo.

In the steel containing Mo, also in the region in which a prior austenite grain diameter of 7 µm or less is obtained, the fatigue strength is improved as the grain diameter is decreased. On the other hand, in the steel containing no Mo, in the region in which a prior austenite grain diameter of 7 µm or less is obtained, the improvement in fatigue strength is not observed. The reason for this is believed that since the hardness of the hard layer of the steel containing no Mo is low as compared to that of the steel containing Mo, when the prior austenite grain diameter is decreased to a certain extent or more, the fatigue failure is caused by transgranular fracture, and hence the influence of the prior austenite grain diameter becomes small.

### Examples

After 100 kg of each of steel No. 1 to 18 having the compositions shown in Table 1 was molten, forging was performed under hot working conditions shown in Table 2, so that steel materials No. 1 to 22 having a bar shape 160 mm in diameter were formed. In this step, the finish temperature of the hot working was set to 700°C or more.

The microstructure of the steel material as forged was observed, and in addition, the following machining test was performed.

Machining Test: Lathe tuning around the periphery of the steel bar was performed using a carbide tool (P10) under non-lubricant conditions at a cutting speed of 200 m/min, a feed rate of 0.25 mm/rev., and a depth of cut of 2.0 mm, and the total cutting time was measure as the tool life, the total cutting time being a time at which the flank friction of the carbide tool reached 0.2 mm. Subsequently, the machinability was evaluated by this total cutting time.

Test pieces No. 1 (parallel portion being 8 mm in diameter) in accordance with JIS Z2274 for a rotary bending fatigue test were sampled from the steel materials as forged, and were then processed by induction quenching under the conditions shown in Table 2 at a frequency of 200 kHz and an output power of 120 kW, followed by tempering at 170°C for 30 minutes, and subsequently, the rotary bending fatigue test was performed. In this evaluation, a critical stress at which no breakage occurred at 1×10⁸ times was defined as the fatigue strength.

In addition, using the test piece processed by quenching, the average prior austenite grain diameter of the hard layer, the thickness of the hard layer, and the maximum diameter of the inclusion composed of oxides were measured by the methods described above.

The results are shown in Table 2.

From all the steel materials Nos. 1-2, and 8-18 each having the composition, the average prior austenite grain diameter of the hard layer, and the maximum diameter of the non-metal inclusion composed of oxides within the ranges defined by the present invention, high fatigue strength and superior machinability can be obtained.

**Table 1**

| Steel No. | Composition (Percent by Mass) | | | | | | | | | | | | | | | | Remarks |
|---|---|---|---|---|---|---|---|---|---|---|---|---|---|---|---|---|---|
| | C | Si | Mn | P | S | Al | Cr | Mo | Cu | Ni | Nb | Ti | V | B | O | Others | |
| 1 | 0.53 | 0.10 | 0.74 | 0.011 | 0.019 | 0.024 | - | 0.37 | - | - | - | 0.018 | - | 0.0013 | 0.0017 | | Inventive Steel |
| 2 | 0.20 | 0.06 | 0.72 | 0.009 | 0.018 | 0.026 | - | 0.36 | - | - | - | 0.016 | - | 0.0009 | 0.0008 | | Comparative Steel |
| 3 | 0.85 | 0.08 | 0.62 | 0.012 | 0.020 | 0.022 | - | 0.37 | - | - | - | 0.019 | - | 0.0013 | 0.0019 | | Comparative Steel |
| 4 | 0.50 | 0.52 | 0.63 | 0.011 | 0.006 | 0.024 | - | 0.27 | - | - | - | 0.018 | - | 0.0013 | 0.0011 | | Comparative Steel |
| 5 | 0.40 | 0.13 | 0.62 | 0.008 | 0.016 | 0.025 | - | 0.02 | - | - | - | 0.017 | - | 0.0010 | 0.0018 | | Comparative Steel |
| 6 | 0.41 | 0.16 | 0.62 | 0.010 | 0.019 | 0.025 | - | 0.83 | - | - | - | 0.016 | - | 0.0012 | 0.0012 | | Comparative Steel |
| 7 | 0.48 | 0.09 | 0.67 | 0.009 | 0.017 | 0.022 | - | 0.29 | - | - | - | 0.018 | - | 0.0012 | 0.0043 | | Comparative Steel |
| 8 | 0.44 | 0.09 | 0.64 | 0.008 | 0.019 | 0.024 | - | 0.26 | 0.14 | 0.21 | - | 0.018 | - | 0.0012 | 0.0013 | | Inventive Steel |
| 9 | 0.56 | 0.17 | 0.67 | 0.009 | 0.020 | 0.024 | - | 0.43 | - | - | - | 0.022 | - | 0.0011 | 0.0012 | | Inventive Steel |
| 10 | 0.43 | 0.29 | 0.63 | 0.011 | 0.018 | 0.026 | 0.21 | 0.25 | - | - | - | 0.022 | - | 0.0009 | 0.0020 | | Inventive Steel |
| 11 | 0.45 | 0.16 | 0.65 | 0.012 | 0.020 | 0.024 | - | 0.40 | - | 0.12 | - | 0.018 | - | 0.0010 | 0.0008 | | Inventive Steel |
| 12 | 0.43 | 0.20 | 0.65 | 0.008 | 0.015 | 0.025 | - | 0.29 | - | - | - | 0.017 | - | 0.0011 | 0.0018 | | Inventive Steel |
| 13 | 0.56 | 0.06 | 0.69 | 0.011 | 0.016 | 0.022 | - | 0.40 | 0.17 | - | - | 0.016 | - | 0.0010 | 0.0014 | Bi:0.15 | Inventive Steel |
| 14 | 0.51 | 0.22 | 0.66 | 0.011 | 0.017 | 0.026 | - | 0.30 | - | 0.20 | - | 0.021 | - | 0.0010 | 0.0015 | | Inventive Steel |
| 15 | 0.48 | 0.16 | 0.64 | 0.008 | 0.018 | 0.023 | - | 0.44 | 0.18 | 0.06 | - | 0.018 | - | 0.0012 | 0.0016 | Te:0.0015 | Inventive Steel |
| 16 | 0.56 | 0.13 | 0.60 | 0.011 | 0.017 | 0.024 | 0.15 | 0.32 | - | - | - | 0.020 | - | 0.0010 | 0.0010 | Pb:0.15, Zr:0.002 | Inventive Steel |
| 17 | 0.42 | 0.11 | 0.73 | 0.011 | 0.020 | 0.024 | - | 0.36 | - | - | 0.015 | 0.017 | 0.015 | 0.0012 | 0.0017 | | Inventive Steel |
| 18 | 0.52 | 0.18 | 0.65 | 0.009 | 0.017 | 0.023 | - | 0.42 | - | - | - | 0.018 | - | 0.0012 | 0.0016 | Ca:0.002, Mg:0.002 | Inventive Steel |

**Table 2**

| Steel Material No. | Steel No. | Hot Working Conditions | | | Microstructure before High-Frequency Induction Quenching *1 (vol.%) | Conditions of High-Frequency Induction Quenching | | | Hard Layer Thickness (mm) | Prior Austenite Grain Diameter of Hard Layer (µm) | Maximum Diameter of Inclusion (µm) | Rotary Bending Fatigue Strength (MPa) | Tool Life (s) | Remarks |
|---|---|---|---|---|---|---|---|---|---|---|---|---|---|---|
| | | Total Reduction Rate from 800°C to 1.000°C (%) | Reduction Rate less than 800°C (%) | Cooling Rate after Working (°C/s) | | Heating Rate (°C/s) | Heating Temperature (°C) | Residence Time (s) | | | | | | |
| 1 | 1 | 80 | 20 | 0.7 | B:95%, M:5% | 600 | 880 | 1 | 1.8 | 1.8 | 7.1 | 515 | 1909 | Example |
| 2 | 1 | 80 | 0 | 0.8 | B:95%, M:5% | 600 | 880 | 1 | 1.4 | 5.3 | 7.4 | 500 | 3150 | Example |
| 3 | 3 | 80 | 20 | 0.7 | B:83%. M:15%. Balance cementite | 600 | 880 | 1 | 1.4 | 2.9 | 7.3 | 608 | 702 | Comparative Example |
| 4 | 4 | 80 | 20 | 1.3 | B:95%, M:5% | 600 | 880 | 1 | 1.8 | 4.9 | 7.4 | 536 | 1725 | Comparative Example |
| 5 | 5 | 80 | 20 | 0.8 | B:20%, Balance F+P | 600 | 880 | 1 | 0.8 | 9.0 | 5.9 | 450 | 2420 | Comparative Example |
| 6 | 6 | 80 | 20 | 0.8 | B:100% | 600 | 880 | 1 | 2.7 | 1.3 | 6.2 | 575 | 827 | Comparative Example |
| 7 | 7 | 80 | 20 | 0.8 | B:95%. M:5% | 600 | 880 | 1 | 1.5 | 2.2 | 17.0 | 514 | 731 | Comparative Example |
| 8 | 8 | 80 | 20 | 2.2 | B:95%, M:5% | 600 | 880 | 1 | 1.6 | 2.8 | 6.0 | 551 | 2403 | Example |
| 9 | 9 | 80 | 20 | 0.8 | B:95%, M:5% | 600 | 880 | 1 | 1.9 | 1.9 | 6.8 | 525 | 2001 | Example |
| 10 | 10 | 80 | 10 | 1.2 | B:98%, M:2% | 600 | 880 | 1 | 2.2 | 3.4 | 6.8 | 539 | 1998 | Example |
| 11 | 11 | 80 | 20 | 0.7 | B:98%, M:2% | 600 | 880 | 1 | 1.9 | 2.8 | 5.4 | 534 | 1966 | Example |
| 12 | 12 | 80 | 20 | 3.0 | B:95%, M:5% | 600 | 880 | 1 | 1.6 | 2.2 | 5.0 | 554 | 2131 | Example |
| 13 | 13 | 80 | 20 | 0.8 | B:95%, M:5% | 600 | 880 | 1 | 1.9 | 1.6 | 6.4 | 542 | 2358 | Example |
| 14 | 14 | 80 | 20 | 0.8 | B:95%, M:5% | 600 | 880 | 1 | 1.8 | 2.7 | 5.0 | 529 | 1965 | Example |
| 15 | 15 | 80 | 20 | 0.8 | B:95%, M:5% | 600 | 880 | 1 | 2.0 | 3.7 | 5.8 | 564 | 2392 | Example |
| 16 | 16 | 80 | 20 | 0.7 | B:93%, M:7% | 600 | 880 | 1 | 2.0 | 3.6 | 6.7 | 558 | 2045 | Example |
| 17 | 17 | 80 | 20 | 0.8 | B:98%, M:2% | 600 | 880 | 1 | 1.8 | 2.1 | 6.4 | 525 | 2471 | Example |
| 18 | 18 | 80 | 30 | 5.0 | B:60%, M:40% | 600 | 880 | 1 | 1.9 | 1.7 | 5.4 | 572 | 2064 | Example |
| 19 9 | 1 | 80 | 20 | 0.8 | B:95%, M:5% | 600 | 1.100 | 1 | 1.9 | 19 | 5.8 | 473 | 1876 | Comparative Example |
| 20 | 1 | 50 | 10 | 0.7 | B:95%, M:5% | 600 | 900 | 1 | 1.9 | 10.0 | 7.1 | 450 | 3150 | Comparative Example |
| 21 | 8 | 80 | 20 | 0.15 | F+P | 600 | 900 | 1 | 1.9 | 15.0 | 7.1 | 380 | 2700 | Comparative Example |
| 22 | 2 | 80 | 20 | 0.2 | B:5%, Balance F+P | 600 | 880 | 1 | 1.0 | 8.0 | 7.4 | 430 | 3100 | Comparative Example |

| | | | | | | | | | | | | | | |
|---|---|---|---|---|---|---|---|---|---|---|---|---|---|---|
| *1: B, M, F, and P represent Bainite, Martensite, Ferrite, and Pearlite, respectively. Underline indicates outside of the present invention. | | | | | | | | | | | | | | |

## Claims

1. A machine structural part comprising 0.3% to 0.7% of C, 0.30% or less of Si, 0.2% to 2.0% of Mn, 0.005% to 0.25% of Al, 0.005% to 0.1% of Ti, 0.05% to 0.6% of Mo, 0.0003% to 0.006% of B, 0.06% or less of S, 0.020% or less of P, 0.0030% or less of O on a mass basis, and the balance being Fe and unavoidable impurities, wherein the machine structural part has a hard layer on at least a part of a surface thereof formed by induction quenching wherein the microstructure of the raw material before induction quenching is composed of bainite and martensite and wherein the total volume fraction thereof is set of 10% or more, an average prior austenite grain diameter of the hard layer is 7 µm or less, and the maximum diameter of a non-metal inclusion composed of oxides is 15 µm or less, wherein the number of precipitates containing Mo is 500 or more per 1 µm³, and the average grain diameter thereof is 20 nm or less, wherein
the machine structural part optionally further comprises at least one element selected from the group consisting of 2.5% or less of Cr, 1.0% or less of Cu, 3.5% or less of Ni, 1.0% or less of Co, 0.1% or less of Nb, 0.5% or less of V, 0.5% of less of Ta, 0.5% or less of Hf, and 0.015% or less of Sb on a mass basis, and/or optionally
further comprises at least one element selected from the group consisting of 1.0% or less of W, 0.005% or less of Ca, 0.005% or less of Mg, 0.005% or less of Te, 0.1% or less of Se, 0.5% or less of Bi, 0.5% or less of Pb, 0.01% or less of Zr, and 0.1% or less of REM on a mass basis.

2. A method for manufacturing a machine structural part a machine structural part according to claim 1, comprising a step of heating the raw material for a machine structural part to 800°C to 1,000°C at least one time by induction quenching at a heating rate of 300°C/sec or more in a temperature region of 600°C to 800°C.

3. The method for manufacturing a machine structural part, according to Claim 2, wherein the heating is performed at a heating rate of 700°C/sec or more.

4. The method for manufacturing a machine structural part, according to Claims 2 or 3, wherein a residence time of the raw material in a temperature region of 800°C or more is set to 5 seconds or less.

## Patentansprüche

1. Strukturelles Maschinenteil, umfassend 0,3 bis 0,7 % C, 0,30 % oder weniger Si, 0,2 bis 2,0 % Mn, 0,005 bis 0,25 % Al, 0,005 bis 0,1 % Ti, 0,05 bis 0,6 % Mo, 0,0003 bis 0,006 % B, 0,06 % oder weniger S, 0,020 % oder weniger P, 0,0030 % oder weniger O (in Gew-%), und Rest-Eisen sowie unvermeidliche Verunreinigungen, wobei das strukturelle Maschinenteil eine harte Schicht auf zumindest einem Teil von dessen Oberfläche aufweist, welche durch Induktionsabschreckung ausgebildet ist, wobei das Gefüge des Rohmaterials vor der Induktionsabschreckung aus Bainit und Martensite zusammengesetzt ist und wobei deren Gesamtvolumenanteil auf 10 % oder mehr eingestellt ist, der durchschnittliche Korndurchmesser des Voraustenits der harten Schicht 7 µm oder weniger beträgt und der maximale Durchmesser nicht metallischer Einschüsse, die aus Oxiden zusammengesetzt sind, 15 µm oder weniger beträgt, wobei die Anzahl von Ausscheidungen, die Molybdän enthalten, 500 oder mehr pro µm² beträgt und deren durchschnittlicher Korndurchmesser 20 nm oder weniger beträgt, wobei
das strukturelle Maschinenteil optional des Weiteren zumindest ein Element umfasst, das aus der Gruppe ausgewählt ist, die aus 2,5 % oder weniger Cr, 1,0 oder weniger Cu, 3,5 % oder weniger Ni, 1,0 % oder weniger Co, 0,1 % oder weniger Nb, 0,5 % oder weniger V, 0,5 % oder weniger Ta, 0,5 % oder weniger Hf sowie 0,15 % oder weniger Sb (in Gew-%) besteht, und/oder optional
des Weiteren zumindest ein Element umfasst, das aus der Gruppe ausgewählt ist, die aus 1,0 % oder weniger W, 0,005 % oder weniger Ca, 0,005 % oder weniger Mg, 0,005 % oder weniger Te, 0,1 % oder weniger Se, 0,5 % oder weniger Bi, 0,5 % oder weniger Pb, 0,01 % oder weniger Zr sowie 0,1 % oder weniger Seltene Erden-Metalle (in Gew-%) besteht.

2. Verfahren zur Herstellung eines strukturellen Maschinenteils gemäß Anspruch 1, umfassend einen Schritt der Erhitzung des Rohmaterials für ein strukturelles Maschinenteil auf 800°C bis 1000°C zumindest einmal durch Induktionsabschreckung bei einer Aufheizrate von 300°C/S. oder mehr in einem Temperaturbereich von 600°C bis 800°C.

3. Verfahren zur Herstellung eines strukturellen Maschinenteils gemäß Anspruch 2, wobei die Erhitzung bei einer Aufheizrate von 700°C/S. oder mehr durchgeführt wird.

4. Verfahren zur Herstellung eines strukturellen Maschinenteils gemäß Anspruch 2 oder 3, wobei die Verweilzeit des Rohmaterials in einem Temperaturbereich von 800°C oder mehr auf 5 Sekunden oder weniger eingestellt ist.

## Revendications

1. Pièce structurelle de machine comprenant, selon une base massique, 0,3% à 0,7% de C, 0,30% ou moins de Si, 0,2% à 2,0% de Mn, 0,005% à 0,25% de Al, 0,005% à 0,1% de Ti, 0,05% à 0,6% de Mo, 0,0003% à 0,006% de B, 0, 06% ou moins de S, 0,020% ou moins de P, 0,0030% ou moins de O, et le reste étant du Fe et des impuretés inévitables, où la pièce structurelle de machine dispose d'une couche dure sur au moins une partie d'une surface de celle-ci formée au moyen d'une trempe par induction où la microstructure de la matière première avant la trempe par induction est composée de bainite et de martensite et où la fraction volumique totale correspondante est établie à 10% ou plus, un diamètre initial moyen des grain d'austénite de la couche dure est de 7 µm ou moins, et le diamètre maximal d'une inclusion non métallique composée d'oxydes est de 15 µm ou moins, où le nombre de précipités contenant du Mo est de 500 ou plus par 1 µm³, et le diamètre moyen des grains correspondant est de 2 nm ou moins, où
optionnellement, la pièce structurelle de machine comprend en plus au moins un élément sélectionné parmi le groupe consistant en 2,5% ou moins de Cr, 1,0% ou moins de Cu, 3,5% ou moins de Ni, 1,0% ou moins de Co, 0,1% ou moins de Nb, 0,5% ou moins de V, 0,5% ou moins de Ta, 0,5% ou moins de Hf, et 0,015% ou moins de Sb, selon une base massique, et/ou optionnellement
comprend au moins un élément sélectionné parmi le groupe consistant en 1,0% ou moins de W, 0,005% ou moins de Ca, 0,005% ou moins de Mg, 0,005% ou moins de Te, 0,1% ou moins de Se, 0,5% ou moins de Bi, 0,5% ou moins de Pb, 0,01% ou moins de Zr, et 0,1% ou moins de REM, selon une base massique.

2. Procédé de fabrication d'une pièce structurelle de machine selon la revendication 1, comprenant une étape qui consiste à chauffer la matière première pour une pièce structurelle de machine de 800°C à 1000°C au moins une fois au moyen d'une trempe par induction à une cadence de chauffage de 300°C/sec ou plus dans une région de température de 600°C à 800°C.

3. Procédé de fabrication d'une pièce structurelle de machine, selon la revendication 2, dans lequel le chauffage est effectué à une cadence de chauffage de 700°C/sec ou plus.

4. Procédé de fabrication d'une pièce structurelle de machine, selon la revendication 2 ou 3, dans lequel un temps de séjour de la matière première dans une région de température de 800°C ou plus est établi à 5 secondes ou moins.
